# EUROPÄISCHE PATENTSCHRIFT

(11) **EP 1 694 539 B1**
(45) Veröffentlichungstag und Bekanntmachung des Hinweises auf die Patenterteilung: **02.06.2010**
(21) Anmeldenummer: 04817549.1
(22) Anmeldetag: 29.10.2004
(51) Int. Cl.: B60R 25/04, B60R 16/02

(54) **STEUERGERÄT MIT AUSSER FUNKTION SETZBARER SCHNITTSTELLE**
CONTROL DEVICE WITH DEACTIVATABLE INTERFACE
APPAREIL DE COMMANDE COMPORTANT UNE INTERFACE DESACTIVABLE

(30) Priorität: 18.12.2003 DE 10359487
(43) Veröffentlichungstag der Anmeldung: 30.08.2006
(73) Patentinhaber: Bayerische Motoren Werke Aktiengesellschaft, 80809 München (DE)
(72) Erfinder: STAHL, Rainer, 81371 München (DE); KRIMMER, Stefan, 85229 Markt Indersdorf (DE)
(86) Internationale Anmeldenummer: PCT/EP2004/012294
(87) Internationale Veröffentlichungsnummer: WO 2005/058659

(56) Entgegenhaltungen:
- EP-A- 0 997 347
- EP-A- 1 187 011
- DE-A1- 19 933 263
- DE-C1- 4 422 261

## Beschreibung

Die Erfindung betrifft ein Steuergerät für ein Kraftfahrzeug, eine elektronische Wegfahrsperre und ein Verfahren nach dem Oberbegriff des betreffenden Hauptanspruchs.

Steuergeräte für Kraftfahrzeuge werden üblicherweise von Automobil-Zulieferern hergestellt. Vor ihrer Auslieferung an den betreffenden Fahrzeug-Hersteller wird das Software-Programm bzw. die Ablaufsteuerung, die das mit einem Mikroprozessor versehene Steuergerät nach seinem Einbau in das Fahrzeug beim Hersteller ausführen soll, in den elektronischen Speicher des Steuergeräts geschrieben. Das herkömmliche Steuergerät weist zwei Schnittstellen auf. Die erste Schnittstelle des Steuergeräts dient zur Übertragung der Ablaufsteuerung beim Zulieferer in den Speicher des Steuergeräts und die zweite Schnittstelle dient zur Kommunikation der Fahrzeug-Elektronik bzw. des Fahrzeug-Bordnetzes mit dem Steuergerät, nachdem das Steuergerät im Fahrzeug verbaut worden ist. Die erste Schnittstelle ist häufig eine sogenannte Debug-Schnittstelle auf der Leiterplatte des Steuergeräts, die über Nadeladapter oder ähnliches kontaktiert wird.

Die erste Schnittstelle wird nach der Auslieferung des Steuergeräts nicht mehr benötigt. Vielmehr besteht die Gefahr, dass das Steuergerät nach dessen Einbau in das Fahrzeug über diese erste Schnittstelle zum Zwecke der Manipulation neu programmiert bzw. neu geflasht wird. Handelt es sich um ein Steuergerät, das Teil der elektronischen Wegfahrsperre des Fahrzeugs ist, so kann die Manipulation in einer Aufhebung bzw. Neuprogrammierung der elektronischen Wegfahrsperre bestehen. Eine weitere Manipulation ist das sogenannte "Chiptuning", d.h. die Verwendung einer geänderten Motorsteuerung zum Zwecke der Leistungssteigerung und dem Nachteil einer verminderten Lebensdauer. Schließlich kann die Manipulation in einer Änderung des Kilometerzählers zur Erzielung eines höheren Kaufpreises für das Fahrzeug bestehen.

Hat der Fahrzeughersteller das vom Zulieferer bereits mit einer Ablaufsteuerung versehene Steuergerät im Fahrzeug verbaut, wird das Steuergerät unter Verwendung von Schutzcodes über den Diagnosestecker mit Hersteller-Daten versehen.

Aus der EP 1 187 011 A ist ein Verfahren zur Programmierung eines Steuergerätes eines Kraftfahrzeuges bekannt, welches durch ein extern dem Steuergerät zugeführtes Signal von einem Betriebsmode in einen Programmiermode umgeschaltet wird. Das externe Signal wird vor der Systeminitialisierung des Steuergerätes, in welcher mindestens ein Funktionsprogramm aufgerufen wird, an das Steuergerät gesendet. Hierdurch wird die Ausführung des Funktionsprogramms unterbunden und ein neuer Steuer- und/oder Regelablauf und/oder neue Daten übertragen und gespeichert.

Die DE 44 22 261 C1 beschreibt eine Wegfahrsperre zum Sperren oder Freigeben der Funktionen eines Steuergeräts in einem Kraftfahrzeug, mit einer Schnittstellenschaltung, die in einer Diagnoseleitung zwischen einem Diagnoseanschluss und dem Steuergerät angeordnet ist. Die Wegfahrsperre weist ferner eine Recheneinheit auf, durch die das Steuergerät mit einem codierten Freigabesignal freigegeben wird. Die Schnittstellenschaltung ist mit einer Transistorstufe versehen, die von der Recheneinheit ein Abkopplungssignal erhält. Hierdurch wird die Verbindung zu dem Diagnoseanschluss gesperrt, sobald ein Datenverkehr zwischen dem Steuergerät und der Recheneinheit stattfindet.

Aufgabe der Erfindung ist es, Manipulationen an den in einem Steuergerät für ein Kraftfahrzeug vorhandenen Daten zu verhindern.

Diese Aufgabe wird durch ein Steuergerät, eine elektronische Wegfahrsperre und ein Verfahren mit den Merkmalen des jeweiligen unabhängigen Anspruchs gelöst.

Vorteilhafte Ausgestaltungen der Erfindung sind Gegenstand der Unteransprüche.

Ein wesentlicher Aspekt der Erfindung bei einem Steuergerät mit einem Mikroprozessor und mindestens einem elektronischen Speicher zur Speicherung einer programmgesteuerten Ablaufsteuerung für ein Kraftfahrzeug und einer ersten elektronischen Schnittstelle zur Übertragung des Programm-Codes der Ablaufsteuerung von einer externen Datenübertragungs-Vorrichtung in den Speicher und einer zweiten elektronischen Schnittstelle, besteht darin, die erste elektronische Schnittstelle irreversibel außer Funktion zu setzen. Die erste elektrische Schnittstelle ist erfindungsgemäß mit elektrischen Kontaktanschlüssen versehen und die elektrische Schnittstelle wird durch deren zumindest teilweise physische Entfernung irreversibel außer Funktion gesetzt. Besonders bevorzugt ist es, die erste elektrische Schnittstelle durch abfräsen, ablasern bzw. verdampfen oder zukleben zugänglicher Kontaktflächen außer Funktion zu setzen. Diese Maßnahmen erlauben es, die Schnittstelle in einfacher und dennoch kostengünstiger Weise außer Funktion setzen zu können, nachdem sie ihren genannten Zweck erfüllt hat.

Vorteilhaft ist hieran zudem, dass die erste Schnittstelle weiterhin die ihr vom Zulieferer des Steuergeräts zugedachte Funktion erfüllt und nach der Erfüllung dieser Funktion außer Funktion gesetzt wird. Damit steht die erste Schnittstelle für eine potenzielle Manipulation nicht mehr zur Verfügung, wenn das Steuergerät im Fahrzeug verbaut worden ist.

Alternativ oder ergänzend ist bei einer Ausführungsform der Erfindung vorgesehen, dass das Steuergerät einen Teil einer elektronischen Wegfahrsperre bildet. Ein Schutz gegen Manipulation über die zweite Schnittstelle ist bei einer Wegfahrsperre besonders wichtig.

Alternativ oder ergänzend ist bei einer anderen Ausführungsform der Erfindung vorgesehen, das Steuergerät derart zu gestalten, dass sicherheitskritische Daten lediglich über eine intakte erste elektrische Schnittstelle ausgelesen werden können.

Alternativ oder ergänzend ist bei einer weiteren Ausführungsform der Erfindung vorgesehen, dass auf den elektronischen Speicher über die zweite elektrische Schnittstelle nur unter Verwendung eines den Zugriff autorisierenden Codes zugegriffen werden kann.

Alternativ oder ergänzend ist bei einer anderen Ausführungsform der Erfindung vorgesehen, dass ein Schreib- und/oder Lesezugriff auf den elektronischen Speicher über die zweite elektrische Schnittstelle ermöglicht ist.

Durch diese Maßnahmen wird der ungeschützte Zugriff auf sicherheitsrelevante Daten im Steuergerät verhindert und ein kontrollierter Zugriff ermöglicht.

Bei einer anderen bevorzugten Ausführungsform ist eine erste elektrische Schnittstelle vorgesehen, die eine Soll-Bruchstelle aufweist, insbesondere auf der Platine des Steuergeräts. Durch mechanisches Abbrechen zumindest eines Teils der ersten elektrischen Schnittstelle entlang der Soll-Bruchstelle, kann die Schnittstelle ebenfalls einfach und kostengünstig irreversibel außer Funktion gesetzt werden.

Alternativ oder ergänzend ist bei einer Ausführungsform der Erfindung vorgesehen, die erste elektrische Schnittstelle mit einer Unterbrechungs-Vorrichtung zu versehen, die unterbrechbare elektrische Verbindungen aufweist. Die erste elektrische Schnittstelle kann dann schnell und kostengünstig durch die Aktivierung der Unterbrechungs-Vorrichtung irreversibel außer Funktion gesetzt werden. Bei entsprechend gestalteter Unterbrechungs-Vorrichtung kann dies beispielsweise durch das Anlegen einer eine Unterbrechung herbeiführenden Überspannung an einem Halbleiterbauelement geschehen.

Aus den vorgenannten Gründen ist es besonders vorteilhaft, wenn erfindungsgemäße Steuergeräte in elektronischen Wegfahrsperren von Kraftfahrzeugen zur Verhinderung von Manipulation oder Diebstahl Verwendung finden.

Bei einem erfindungsgemäßen Verfahren zur irreversiblen Außerfunktionsetzung einer ersten elektrischen Schnittstelle eines Steuergeräts, das einen Mikroprozessor und einen elektronischen Speicher zur Speicherung einer programmgesteuerten Ablaufsteuerung sowie eine zweite elektrische Schnittstelle aufweist, ist vorgesehen, dass der die Ablaufsteuerung bildende Programm-Code in einem ersten Schritt über die erste elektrische Schnittstelle in den elektronischen Speicher geschrieben wird, und die erste elektrische Schnittstelle in einem zweiten Schritt irreversibel außer Funktion gesetzt wird.

Bei einer ersten Alternative des erfindungsgemäßen Verfahrens ist vorgesehen, dass die erste elektrische Schnittstelle mit elektrischen Kontaktanschlüssen versehen ist, die durch abfräsen, ablasem bzw. verdampfen oder zukleben irreversibel außer Funktion gesetzt werden.

Bei einer zweiten Alterbnative des erfindungsgemäßen Verfahrens ist vorgesehen, dass die erste elektrische Schnittstelle mit einer Unterbrechungs-Vorrichtung versehen ist, die durch Überspannung unterbrechbare elektrische Verbindungen aufweist, und die elektrische Schnittstelle durch Überspannung irreversibel außer Funktion gesetzt wird.

Durch diese Vorgehensweise kann ein nicht autorisierter Zugriff auf sicherheitsrelevante Daten im Steuergerät einfach, schnell und kostengünstig im unmittelbaren Anschluss an die Programmierung des Steuergeräts über die erste Schnittstelle durch den Zulieferer und damit die Möglichkeit des Auslesen von sicherheitsrelevanten Daten oder eine Manipulation von Daten verhindert werden.

## Patentansprüche

1. Steuergerät für Fahrzeuge mit einem Mikroprozessor und mindestens einem elektronischen Speicher zur Speicherung einer programmgesteuerten Ablaufsteuerung für ein Kraftfahrzeug und einer ersten elektrischen Schnittstelle zur Übertragung des Programm-Codes der Ablaufsteuerung von einer externen Datenübertragungs-Vorrichtung in den Speicher und einer zweiten elektrischen Schnittstelle, wobei die erste elektrische Schnittstelle irreversibel außer Funktion gesetzt ist, **dadurch gekennzeichnet, dass** die erste elektrische Schnittstelle mit elektrischen Kontaktanschlüssen versehen ist, und die elektrische Schnittstelle durch die zumindest teilweise physische Entfernung der Kontaktanschlüsse durch abfräsen, ablasern bzw. verdampfen, zukleben oder mechanisches Abbrechen eines Teils der ersten elektrischen Schnittstelle entlang einer Soll-Bruchstelle der Platine des Steuergeräts irreversibel außer Funktion gesetzt wird.

2. Steuergerät nach Anspruch 1, **dadurch gekennzeichnet, dass** das Steuergerät einen Teil einer elektronischen Wegfahrsperre bildet.

3. Steuergerät nach Anspruch 1 oder 2, **dadurch gekennzeichnet, dass** das Steuergerät derart ausgebildet ist, dass sicherheitskritische Daten lediglich über eine intakte erste elektrische Schnittstelle ausgelesen werden können.

4. Steuergerät nach einem der Ansprüche 1 bis 3, **dadurch gekennzeichnet, dass** auf den elektronischen Speicher über die zweite elektrische Schnittstelle nur unter Verwendung eines den Zugriff autorisierenden Codes zugegriffen werden kann.

5. Steuergerät nach Anspruch 4, **dadurch gekennzeichnet, dass** ein Schreib- und/oder Lesezugriff auf den elektronischen Speicher über die zweite elektri- sche Schnittstelle ermöglicht ist.

6. Steuergerät nach einem der Ansprüche 1 bis 5, **dadurch gekennzeichnet, dass** die erste elektrische Schnittstelle mit einer Unterbrechungs-Vorrichtung versehen ist, die unterbrechbare elektrische Verbindungen aufweist, und die elektrische Schnittstelle durch die Aktivierung der Unterbrechungs-Vorrichtung irreversibel außer Funktion gesetzt wird, insbesondere durch das Anlegen einer eine Unterbrechung herbeiführenden Überspannung.

7. Elektronische Wegfahrsperre eines Kraftfahrzeugs, **dadurch gekennzeichnet, das** die elektronische Wegfahrsperre ein Steuergerät nach einem der vorstehenden Ansprüche aufweist.

8. Verfahren zur irreversiblen Außerfunktionsetzung einer ersten elektrischen Schnittstelle eines Steuergeräts, das einen Mikroprozessor und einen elektronischen Speicher zur Speicherung einer programmgesteuerten Ablaufsteuerung sowie eine zweite elektrische Schnittstelle aufweist, wobei der die Ablaufsteuerung bildende Programm-Code in einem ersten Schritt über die erste elektrische Schnittstelle in den elektronischen Speicher geschrieben wird, und die erste elektrische Schnittstelle in einem zweiten Schritt irreversibel außer Funktion gesetzt wird, **dadurch gekennzeichnet, dass** die erste elektrische Schnittstelle mit elektrischen Kontaktanschlüssen versehen ist, die durch abfräsen, ablasem bzw. verdampfen oder zukleben irreversibel außer Funktion gesetzt werden und/oder dass die erste elektrische Schnittstelle mit einer Unterbrechungs-Vorrichtung versehen ist, die unterbrechbare elektrische Verbindungen aufweist, und die elektrische Schnittstelle durch durch das Anlegen einer Unterbrechung herbeiführenden Überspannung an einem Halbleiterbauelement irreversibel außer Funktion gesetzt wird.

## Claims

1. A control unit for vehicles with a microprocessor and at least one electronic memory for storing a programme-controlled sequence control for a motor vehicle and with a first electrical interface for transmitting the programme code of the sequence control from an external data transmitting device to the memory and with a second electrical interface, the first electrical interface being irreversibly deactivated, **characterised in that** the first electrical interface is provided with electrical contract connections, and the electrical interface is irreversibly deactivated by the at least partial physical removal of the contact connections by milling off, removing by laser or evaporating, gluing or mechanically tearing off a part of the first electrical interface along a desired breaking point of the circuit board of the control unit.

2. A control unit according to claim 1, **characterised in that** the control unit forms a part of an electronic immobiliser.

3. A control unit according to claim 1 or 2, **characterised in that** the control unit is configured in such a way that safety-critical data can only be read via an intact first electrical interface.

4. A control unit according to any one of claims 1 to 3, **characterised in that** the electronic memory can only be accessed via the second electronic interface using a code authorising access.

5. A control unit according to claim 4, **characterised in that** a write and/or read access to the electronic memory is made possible via the second electrical interface.

6. A control unit according to any one of claims 1 to 5, **characterised in that** the first electrical interface is provided with an interrupt device, which has interruptible electrical connections, and the electrical interface is irreversibly deactivated by activating the interrupt device, more especially by applying an excess voltage that causes an interrupt.

7. An electronic immobiliser of a motor vehicle, **characterised in that** the electronic immobiliser has a control unit according to any one of the preceding claims.

8. A method for irreversibly deactivating a first electrical interface of a control unit, which has a microprocessor and an electronic memory for storing a programme-controlled sequence control, as well as a second electrical interface, the programme code forming the sequence control being written in the electronic memory in a first step via the first electrical interface, and the first electrical interface being irreversibly deactivated in a second step, **characterised in that** the first electrical interface is provided with electrical contact connections, which can be irreversibly deactivated by milling off, removing by laser or evaporating or gluing, and/or **in that** the first electrical interface is provided with an interrupt device, which has interruptible electrical connections, and the electrical interface is irreversibly deactivated by applying an excess voltage causing an interrupt at a semiconductor component.

## Revendications

1. Appareil de commande pour véhicule comportant un microprocesseur et au moins une mémoire électronique pour enregistrer une commande de déroulement commandée par programme pour un véhicule automobile et une première interface électrique pour transmettre le code programme de la commande de déroulement à partir d'un dispositif de transmission de données externes dans la mémoire et d'une seconde interface électrique,
la première interface électrique étant mise hors service de manière irréversible,
**caractérisé en ce que**
la première interface électrique est munie de bornes de contact et l'interface électrique est mise hors service de manière irréversible par l'enlèvement physique au moins partiel des bornes de contact.

2. Appareil de commande selon la revendication 1,
**caractérisé en ce que**
l'appareil de commande constitue une partie d'un verrou électronique d'immobilisation.

3. Appareil de commande selon la revendication 1 ou 2,
**caractérisé en ce que**
l'appareil de commande est réalisé pour que les données critiques pour la sécurité puissent être lues uniquement par l'intermédiaire d'une première interface électrique intacte.

4. Appareil de commande selon l'une des revendications 1 à 3,
**caractérisé en ce qu'**
on ne peut accéder à la mémoire électronique par l'intermédiaire de la seconde interface électrique, seulement en utilisant un code autorisant l'accès.

5. Appareil de commande selon la revendication 4,
**caractérisé en ce qu'**
un accès de lecture et/ou d'écriture à la mémoire électronique, est permis par la seconde interface électrique.

6. Appareil de commande selon l'une des revendications 1 à 5,
**caractérisé en ce que**
la première interface électrique est munie d'un dispositif de coupure comportant des liaisons électriques susceptibles d'être coupées et l'interface électrique est mise hors service de manière irréversible par l'activation du dispositif de coupure, notamment par l'application d'une surtension produisant la coupure.

7. Verrou électronique d'immobilisation d'un véhicule automobile,
**caractérisé en ce que**
le verrou électronique d'immobilisation comporte un appareil de commande selon l'une des revendications précédentes.

8. Procédé de mise hors service irréversible d'une première interface électrique d'un appareil de commande comportant un microprocesseur et une mémoire électronique pour enregistrer une commande de déroulement commandée par programme ainsi qu'une seconde interface électrique,
le code programme formant la commande de déroulement étant inscrit au cours d'une première étape dans la mémoire électronique par l'intermédiaire de la première interface électrique, et la première interface électrique est mise hors service de manière irréversible au cours d'une seconde étape,
**caractérisé en ce que**
la première interface électrique est munie de bornes de contact électriques qui sont mises hors service de manière irréversible par fraisage, enlèvement par laser, vaporisation ou collage et/ou la première interface électrique est munie d'un dispositif de coupure qui comporte des liaisons électriques susceptibles d'être coupées, et l'interface électrique est mise hors service de façon irréversible par l'application d'une surtension produisant la coupure d'un composant semi-conducteur.
